# EUROPÄISCHE PATENTSCHRIFT

(11) **EP 1 902 071 B1**
(45) Veröffentlichungstag und Bekanntmachung des Hinweises auf die Patenterteilung: **16.09.2009**
(21) Anmeldenummer: 06763862.7
(22) Anmeldetag: 23.06.2006
(51) Int. Cl.: C08F 2/24, D21H 17/37

(54) **FEINTEILIGE, STÄRKEHALTIGE POLYMERDISPERSIONEN**
FINE-PARTICLED POLYMER DISPERSIONS CONTAINING STARCH
DISPERSIONS POLYMÈRES AMYLACÉES À FINES PARTICULES

(30) Priorität: 29.06.2005 DE 102005030787
(43) Veröffentlichungstag der Anmeldung: 26.03.2008
(73) Patentinhaber: BASF SE, 67056 Ludwigshafen (DE)
(72) Erfinder: STEIN, Hildegard, 68163 Mannheim (DE); ETTL, Roland, 68775 Ketsch (DE)
(86) Internationale Anmeldenummer: PCT/EP2006/063502
(87) Internationale Veröffentlichungsnummer: WO 2007/000419

(56) Entgegenhaltungen:
- WO-A-99/42490

## Beschreibung

Die Erfindung betrifft feinteilige, stärkehaltige Polymerdispersionen, die erhältlich sind durch Emulsionspolymerisation von ethylenisch ungesättigten Monomeren in Gegenwart mindestens eines Redoxinitiators und Stärke, Verfahren zur Herstellung der Dispersionen und ihre Verwendung als Leimungsmittel für Papier.

Aus EP-B-0 276 770 und EP-B-0 257 412 sind Leimungsmittel auf Basis feinteiliger, wässriger Dispersionen bekannt, die durch Copolymerisation von ethylenisch ungesättigten Monomeren wie Acrylnitril und (Meth)acrylsäureestern und gegebenenfalls bis zu 10 Gew.-% anderer Monomeren wie Styrol nach Art einer Emulsionspolymerisation in Gegenwart von Peroxidgruppen enthaltenden Initiatoren, insbesondere von Redoxinitiatoren, und abgebauter Stärke erhältlich sind.

In der EP-A-0 307 816 werden als Leimungsmittel u.a. auch feinteilige, wässrige, kationische Polymerdispersionen beschrieben, die durch Emulsionscopolymerisation von
(i) Acrylnitril, Methacrylnitril, Methacrylsäuremethylester und/oder Styrol,
(ii) mindestens einem Acrylsäure- oder Methacrylsäureester von jeweils einwertigen, gesättigten-C₃-C₈-Alkoholen, Vinylacetat, Vinylpropionat und/oder Butadien-1,3 und ggf.
(iii) anderen ethylenisch ungesättigten Monomeren in einer wässrigen Lösung einer abgebauten kationischen Stärke in Gegenwart eines Redoxinitiators erhältlich sind.

Aus der EP-A-0 536 597 sind wässrige Polymerdispersionen bekannt, die durch radikalische Emulsionscopolymerisation ungesättigter Monomere in Gegenwart eines Stärkeabbauproduktes erhältlich sind. Das Stärkeabbauprodukt entsteht durch Hydrolyse in wässriger Phase und zeigt bei Raumtemperatur eine vollständige Löslichkeit in Wasser bei einem gewichtsmittleren Molekulargewicht M_{w} von 2500 bis 25000. Als Monomergemische werden bevorzugt Mischungen aus Styrol und (Meth)Acrylsäureestem von einwertigen, gesättigten C₁-C₁₂-Alkoholen in Kombination von bis zu 10 Gew.-% von Acrylsäure und/oder Methacrylsäure eingesetzt. Die Dispersionen werden als Bindemittel, Klebstoff, Schlichtemittel für Fasern oder zur Herstellung von Überzügen verwendet.

Aus der EP-B-1 056 783 sind ebenfalls wässrige, feinteilige Polymerdispersionen bekannt, die zur Oberflächenleimung von Papier, Pappe und Karton eingesetzt werden. Die Dispersionen sind durch radikalisch initiierte Emulsionspolymerisation von ethylenisch ungesättigten Monomeren in Gegenwart von abgebauter Stärke mit einem zahlenmittleren Molekulargewicht Mₙ von 500 bis 10000 erhältlich. Die Monomermischungen bestehen aus (i) mindestens einem gegebenenfalls substituierten Styrol, (ii) mindestens einem (Meth)acrylsäure-C₁-C₄-alkylester sowie (iii) gegebenenfalls bis zu 10 Gew.-% anderen ethylenisch ungesättigten Monomeren. Die Polymerisation erfolgt in Gegenwart eines pfropfaktiven, wasserlöslichen Redoxsystems.

Aus der WO-A-00/23479 sind ebenfalls Leimungsmittel bekannt, die erhältlich sind durch radikalisch initiierte Emulsionscopolymerisation eines Monomerengemisches (A) aus beispielsweise (i) mindestens einem gegebenenfalls substituierten Styrol, (ii) gegebenenfalls mindestens einem C₄-C₁₂-Alkyl(Meth)acrylat und (iii) mindestens einem Monomer aus der Gruppe Methylacrylat, Ethylacrylat und Propylacrylat in Gegenwart von (B) Stärke mit einem mittleren Molekulargewicht von 1000 oder größer, wobei das Gewichtsverhältnis von (A) : (B) 0,6 : 1 bis 1,7 : 1 beträgt, das Leimungsmittel frei von Emulgatoren oder oberflächenaktiven Mitteln eines Molekulargewichts von weniger als 1000 ist und praktisch keine Säuregruppen aufweisenden Monomeren einpolymerisiert enthält. Als Komponente (B) des Leimungsmittels kommt vorzugsweise kationische Stärke, insbesondere oxidierte kationische Maisstärke in Betracht, die Komponente (A) besteht vorzugsweise aus einer Mischung von Styrol, n-Butylacrylat und Methylacrylat.

Aus der EP-B-1 165 642 ist eine weitere Polymerdispersion und eine Verfahren zu ihrer Herstellung bekannt, wobei man eine Monomermischung, die mindestens ein Vinylmonomer enthält, in einer wässrigen Lösung einer Stärke polymerisiert, die einen Substitutionsgrad (DS), bezüglich der kationischen oder anionischen Substituenten, von 0,01 bis 1 und in kationisierter und/oder anionisierter Form eine Grenzviskosität von >1,0 dl/g hat. Die bei der Polymerisation eingesetzte Stärke ist entweder nicht abgebaut oder nur geringfügig oxidiert, jedoch in keinem Fall enzymatisch abgebaut. Das entstehende Polymer hat eine Filmbildungstemperatur von -50 bis +200°C. Es ist beispielsweise aus Acrylaten und Styrol und gegebenenfalls Acrylnitril aufgebaut. Die so herstellbaren Polymerdispersionen werden als Leimungsmittel für Papier verwendet.

Nach dem aus der WO-A-02114393 bekannten Verfahren werden Leimungs- und Beschichtungsmittel für Papier durch radikalisch initiierte Emulsionspolymerisation eines Monomergemisches aus (i) mindestens einem (Meth)Acrylsäureester von einwertigen, gesättigten C₃-C₈-Alkoholen und (ii) einem oder mehreren weiteren ethylenisch ungesättigten Monomeren in Gegenwart von Stärke und/oder eines Stärkederivates hergestellt, wobei man Monomere und Initiator kontinuierlich einer wässrigen Stärkelösung zuführt und den Initiator in zwei Teilmengen unter speziell definierten Bedingungen dosiert.

Außerdem sind auf Stärke basierende Polymere bekannt, die durch Polymerisieren von (i) 35 bis 65 Gew.-% eines ethylenisch ungesättigten Monomers, das frei von Carboxylgruppen ist, (ii) 35 bis 65 Gew.-% einer ethylenisch ungesättigten Mono- oder Dicarbonsäure oder deren Salzen und (iii) 0 bis 15 Gew.-% eines anderen ethylenisch ungesattigten Monomers in wassngem Medium in Gegenwart von Starke herstellbar sind, vgl. WO-A-2004/078807. Als Stärke kann man sowohl native Stärke, Dextrin als auch Stärkederivate einsetzten. Die entstehenden Polymeren sind wasserlöslich. Sie werden als Leimungsmittel für Papier, Pappe und Karton verwendet.

Der Erfindung liegt die Aufgabe zugrunde, weitere stärkehaltige Polymerdispersionen zur Verfügung zu stellen, die gegenüber den bekannten, vergleichbaren Polymerdispersionen verbesserte Anwendungseigenschaften aufweisen, z.B. eine verbesserte Leimungswirkung sowie Bedruckbarkeit, insbesondere Ink Jet-Bedruckbarkeit und Tonerhaftung.

Die Aufgabe wird erfindungsgemäß gelöst mit feinteiligen, stärkehaltigen Polymerdispersionen, wie sie in Anspruch 1 beschrieben sind.

Als Komponente (b) der besonders bevorzugt in Betracht kommenden stärkehaltigen Polymerdispersionen eignen sich insbesondere 19 bis 25 Gew.-% Acrylsäure-n-butylester, Acrylsäure-sek.-butylester Acrylsäure-iso-butylester, Acrylsäure-tert.-butylester und/oder Acrylsäure-2-ethylhexylester.

Gegenstand der Erfindung ist außerdem ein Verfahren zur Herstellung der feinteiligen, stärkehaltigen Polymerdispersionen, wie es in Anspruch 4 beschrieben ist.

Ethylenisch ungesättigte Monomere der Gruppe (a) sind beispielsweise Styrol und substituierte Styrole wie α-Methylstyrol. Das bevorzugt eingesetzte Monomer dieser Gruppe ist Styrol. Unter gegebenenfalls substituierten Styrolen sollen ebenfalls am Ring halogenierte Styrole wie Chlorstyrol oder C₁- bis C₄-substituierte Styrole wie Vinyltoluol verstanden werden.

Als Monomere der Gruppe (b) kommen beispielsweise sämtliche Ester der Acrylsäure und der Methacrylsäure in Betracht, die sich von einwertigen C₂- bis C₁₂-Alkoholen ableiten wie Ethylacrylat, Ethylmethacrylat, n-Propylacrylat, n-Propylmethacrylat, I-sopropylacrylat, Isopropylmethacrylat, n-Butylacrylat, n-Butylmethacrylat, Isobutylacrylat, Isobutylmethacrylat, tert.-Butylacrylat, tert.-Butyimethacrylat, sek.-Butylacrylat, sek.-Butylmethacrylat, n-Pentylacrylat, n-Pentylmethacrylat, Neopentylacrylat, Neopentylmethacrylat, Cyclohexylacrylat, Cyclohexylmethacrylat, 2-Hexylacrylat, 2-Hexylmethacrylat, 2-Ethylhexylacrylat, 2-Ethylhexylmethacrylat, n-Octylacrylat, n-Octylmethacrylat, Isooctylacrylat, Isooctylmethacrylat, Decylacrylat und Decylmethacrylat, Dodecylacrylat, Dodecylmethacrylat. Als Acrylsäureester kommt außerdem noch Methylacrylat in Betracht. Bevorzugt eingesetzte Monomere dieser Gruppe sind n-Butylacrylat, sek.-Butylacrylat, Isobutylacrylat und tert.-Butylacrylat.

Beispiele für Monomere der Gruppe (c) sind Stearylacrylat, Stearylmethacrylat, Palmitylacrylat, Behenylacrylat, Behenylmethacrylat, Vinylacetat, Vinylpropionat, Hydroxyethylacrylat, Hydroxyethylmethacrylat, N-Vinylformamid, Acrylamid, Methacrylamid, N-Vinylpyrrolidon, N-Vinylimidazol, N-Vinylcaprolactam, Acrylsäure, Methacrylsäure, Acrylamidomethylpropansulfonsäure, Vinylsulfonsäure, Styrolsulfonsäure und Salze der Säuregruppen enthaltenden Monomeren. Die sauren Monomeren können in partiell oder in vollständig neutralisierter Form eingesetzt werden. Als Neutralisierungsmittel werden beispielsweise Natronlauge, Kalilauge, Natriumcarbonat, Natriumhydrogencarbonat, Calciumhydroxid und Ammoniak verwendet.

Die Polymerisation der Monomeren erfolgt in Gegenwart einer abgebauten kationisierten Stärke, die eine Molmasse M_{w} von 1000 bis 65 000 hat. Sofern das Molekulargewicht M_{w} der verwendeten kationisierten Stärke nicht bereits in dem Bereich 1000 bis 65 000 liegt, kann diese gegebenenfalls vor Beginn der Polymerisation bzw. in einem separaten Schritt einem Molekulargewichtsabbau, der z.B. enzymatisch und/oder oxidativ erfolgt, unterworfen werden. Die Molmasse M_{w} der abgebauten kationisierten Stärke liegt vorzugsweise in dem Bereich von 2500 bis 35 000. Die mittleren Molekulargewichte M_{w} der abgebauten Stärken können leicht durch dem Fachmann bekannte Methoden ermittelt werden, z. B. mittels Gelpermeationschromatographie unter Verwendung eines Vielwinkellichtstreudetektors.

Kationisierte Stärken sind bekannt. Sie werden beispielsweise durch Umsetzung von nativer Stärke mit mindestens einem Quaternierungsmittel wie 2,3-Epoxipropyltrimethylammoniumchlorid hergestellt. Die kationisierten Stärken enthalten quaternäre Ammoniumgruppen. Der Anteil der kationischen Gruppen in der kationisierten Stärke wird mit Hilfe des Substitutionsgrades (DS) angegeben. Er beträgt beispielweise 0,005 bis 1,0 vorzugsweise 0,01 bis 0,5.

Man kann sämtliche kationische Stärken verwenden. Gebräuchliche kationische Stärken werden beispielsweise durch Umsetzung von nativen Stärken wie Kartoffel-, Weizen-, Mais-, Reis- oder Tapioka-, Sorghum oder Wachsstärken, die einen Gehalt an Amylopektin von >80 %, vorzugsweise >95 % haben wie Wachsmaisstärke oder Wachskartoffelstärke, mit mindestens einem Quaternierungsmittel hergestellt. Bevorzugt werden Stärketypen mit einem hohen Gehalt an Amylopektin von 80% und höher eingesetzt. Die kationisierten Stärken können durch Veretherung, Veresterung oder Vernetzung noch weitergehend, z. B. hydrophob modifiziert sein. Der Abbau der kationisierten Stärke kann vor oder während der Polymerisation der Monomeren erfolgen. Vorzugsweise wird der Stärkeabbau vor der Polymerisation durchgeführt. Er kann oxidativ, thermisch, acidolytisch oder enzymatisch vorgenommen werden. Vorzugsweise erfolgt der Stärkeabbau enzymatisch und/oder oxidativ direkt vor Beginn der Emulsionspolymerisation in der Polymerisationsvorrichtung oder in einem separaten Schritt. Man kann eine einzige abgebaute kationisierte Stärke oder auch Mischungen aus zwei oder mehreren abgebauten Stärken bei der Polymerisation einsetzen.

Um die Polymerisation zu initiieren, setzt man erfindungsgemäß einen Redoxinitiator ein. Es handelt sich dabei vorzugsweise um pfropfaktive, wasserlösliche Redoxsysteme, beispielsweise aus Wasserstoffperoxid und einem Schwermetallsalz oder aus Wasserstoffperoxid und Schwefeldioxid oder aus Wasserstoffperoxid und Natriummetabisulfit. Weitere geeignete Redoxsysteme sind Kombinationen aus tert.-Butylhydroperoxid/Schwefeldioxid, Na- oder K-Persulfat/Natriumbisufit, Ammoniumpersulfat/Natriumbisulfit oder Ammoniumpersulfat/Eisen(II)sulfat. Vorzugsweise wird Wasserstoffperoxid in Kombination mit einem Schwermetallsalz wie Eisen(II)sulfat, eingesetzt. Häufig enthält das Redoxsystem zusätzlich ein weiteres Reduktionsmittel wie Ascorbinsäure, Natriumformaldehydsulfoxylat, Natriumdisulfit und/oder Natriumdithionit. Da die Polymerisation der Monomeren in Gegenwart von Stärke erfolgt und da Stärke ebenfalls als Reduktionsmittel wirkt, wird meistens auf die Mitverwendung weiterer Reduktionsmittel verzichtet. Die Redoxinitiatoren werden beispielsweise in einer Menge von 0,05 bis 5 Gew.-%, vorzugsweise 0,1 bis 4 Gew.-%, bezogen auf die Monomeren, eingesetzt.

Die Emulsionspolymerisation der Monomeren (a) bis (c) erfolgt in wässrigem Medium in Gegenwart einer kationisierten Stärke (d). Die Polymerisation kann sowohl im Zulaufverfahren als auch nach einem Batch-Verfahren durchgeführt werden. Vorzugsweise legt man eine wässrige Lösung einer abgebauten kationischen Stärke und eines Schwermetallsalzes vor und gibt die Monomeren entweder getrennt oder als Mischung und separat davon den oxidierend wirkenden Teil des Redox-Initiators, vorzugsweise Wasserstoffperoxid, kontinuierlich oder diskontinuierlich bzw. absatzweise zu. Auch eine Stufen- oder Gradientenfahrweise, die aus der WO-A-02114393 bekannt ist, kann zur Herstellung der stärkehaltigen Polymerdispersionen angewendet werden. Dabei kann die Zugabe über den Dosierzeitraum gleichmäßig oder ungleichmäßig, d. h. mit wechselnder Dosiergeschwindigkeit erfolgen.

Die Polymerisation wird üblicherweise unter Ausschluss von Sauerstoff durchgeführt, bevorzugt in einer Inertgasatmosphäre, z. B. unter Stickstoff. Während der Polymerisation ist für eine gute Durchmischung der Komponenten zu sorgen. So wird das Reaktionsgemisch vorzugsweise während der gesamten Dauer der Polymerisation und einer sich gegebenenfalls daran anschließenden Nachpolymerisation gerührt.

Die Polymerisation wird üblicherweise bei Temperaturen zwischen 30 und 110 °C, vorzugsweise bei 50 bis 100 °C durchgeführt. Möglich ist auch eine Verwendung eines Druckreaktors oder Durchführung einer kontinuierlichen Polymerisation in einer Rührkessel-Kaskade oder einem Strömungsrohr.

Zur Erhöhung der Dispergierwirkung können dem Polymerisationsansatz übliche ionische, nichtionische oder amphotere Emulgatoren zugesetzt werden. Übliche Emulgatoren werden nur gegebenenfalls eingesetzt. Die angewendeten Mengen betragen 0 bis 3 Gew.-% und liegen vorzugsweise in dem Bereich von 0,02 bis 2 Gew.-% bezogen auf die Summe der eingesetzten Monomere (a) bis (c). Besonders bevorzugt wird die Emulsionspolymerisation jedoch in Abwesenheit eines Emulgators durchgeführt. Übliche Emulgatoren sind in der Literatur eingehend beschrieben, siehe beispielsweise M. Ash, I. Ash, Handbook of Industrial Surfactants, Third Edition, Synapse Information Resources. Inc. Beispiele für übliche Emulgatoren sind die Umsetzungsprodukte von langkettigen einwertigen Alkoholen (C₁₀- bis C₂₂-Alkanole) mit 4 bis 50 Mol Ethylenoxid und/oder Propylenoxid pro Mol Alkohol oder ethoxylierte Phenole oder mit Schwefelsäure veresterte alkoxylierte Alkohole, die meistens in mit Alkalilauge neutralisierter Form verwendet werden. Weitere übliche Emulgatoren sind beispielsweise Natriumalkylsulfonate, Natriumalkylsulfate, Natriumdodecylbenzolsulfonat, Sulfobernsteinsäureester, quartäre Alkylammoniumsalze, Alkylbenzylammoniumsalze, wie Dimethyl-C₁₂- bis C₁₈-alkylbenzylammoniumchloride, primäre, sekundäre und tertiäre Fettaminsatze, quartäre Amidoaminverbindungen, Alkylpyridiniumsalze, Alkylimidazoliniumsalze und Alkyloxazoliniumsalze.

Während der Emulsionspolymerisation kann man die Monomere entweder direkt in die Vorlage dosieren oder man kann sie in Form einer wässrigen Emulsion oder Miniemulsion dem Polymerisationsansatz zuführen. Dazu werden die Monomere unter Verwendung der bereits genannten üblichen Emulgatoren in Wasser emulgiert.

Die Polymerisation kann gegebenenfalls noch in Gegenwart von üblichen Reglern vorgenommen werden. Prinzipiell kann man sämtliche bekannten Regler einsetzen, die das Molekulargewicht der entstehenden Polymerisate erniedrigen, bevorzugt verwendete Regler sind jedoch organische Verbindungen, die Schwefel in gebundener Form enthalten, beispielsweise Mercaptane, Di- und Polysulfide, Ester und Sulfide von Thio- und Dithiocarbonsäuren sowie Enolsulfide. Außerdem kommen Halogenverbindungen, Aldehyde, Ketone, Ameisensäure, Enolether, Enamine, Hydroxylamin, halogenierte Kohlenwasserstoffe, Alkohole, Ethylbenzol und Xylol als Regler in Betracht.

Beispiele für Regler auf Basis organischer Verbindungen, die Schwefel in gebundener Form enthalten, sind Mercaptoethanol, Mercaptopropanol, Mercaptobutanol, Thioglykolsäure, Thioessigsäure, Thiopropionsäure, Thioethanolamin, Natriumdimethyldithiocarbamat, Cystein, Ethylthioglykolat, Trimethylolpropantri-thioglykolat, Pentaerythrit-tetra(mercaptopropionat), Pentaerythrit-tetra-thioglykolat, Trimethylolpropantri(mercaptoacetat), Methylen-bis-thioglykolsäurebutylester, Thioglycerin, Glycerinmonothioglykolat, n-Octadecylmercaptan, n-Dodecylmercaptan, tert.-Dodecylmercaptan, Butylmercaptan, Thiophenol, Mercaptotrimethoxysilan und Acetylcystein.

Als Regler eignen sich auch Halogenverbindungen wie Trichlormethan, Tetrachlormethan und Bromtrichlormethan, Aldehyde wie Acetaldehyd, Propionaldehyd, Crotonaldehyd oder Butyraldehyd, Alkohole wie n-Propanol und Isopropanol sowie Buten-3-ol und Allyllalkohol. Weitere geeignete Regler sind Vitamin-A-acetat, Vitamin-A-palmitat, Geranial, Neral, Geraniol, Geranylacetat, Limonen, Linalylacetat, Terpinolen, γ-Terpinen, α-Terpinen, R(-)-α-Phellandren, Terpineol, Resorcin, Hydrochinon, Brenzkatechin, Phloroglucin und Diphenylethylen. Weitere Beispiele für Regler auf Basis von Terpinolen und ungesättigten alicyclischen Kohlenwasserstoffen findet man z.B. in Winnacker-Küchler, Chemische Technologie, Band 6, Seiten 374 bis 381, Carl Hanser Verlag, München Wien, 1982.

Bezogen auf die Monomeren (a) - (c) beträgt die Menge an Regler beispielsweise 0 bis 5, vorzugsweise 0,1 bis 2 Gew.-%.

Die Polymerisation wird bei pH-Werten von 2 bis 9, vorzugsweise im schwach sauren Bereich bei pH-Werten von 3 bis 5.5 durchgeführt. Der pH-Wert kann vor oder während der Polymerisation mit üblichen Säuren wie Salzsäure, Schwefelsäure oder Essigsäure oder auch mit Basen wie Natronlauge, Kalilauge, Ammoniak, Ammoniumcarbonat, usw. auf den gewünschten Wert eingestellt werden. Bevorzugt wird die Dispersion nach Beendigung der Polymerisation mit Natronlauge, Kalilauge oder Ammoniak auf einen pH-Wert zwischen 5 und 7 eingestellt.

Um die restlichen Monomeren möglichst weitgehend aus der stärkehaltigen Polymerdispersion zu entfernen, führt man zweckmäßigerweise eine Nachpolymerisation durch. Hierfür setzt man der Polymerdispersion nach Beendigung der Hauptpolymerisation einen Initiator aus der Gruppe Wasserstoffperoxid, Peroxide, Hydroperoxide und/oder Azostarter zu. Die Kombination der Initiatoren mit geeigneten Reduktionsmitteln, wie beispielsweise Ascorbinsäure oder Natriumbisulfit, ist ebenfalls möglich. Bevorzugt werden öllösliche, in Wasser schwerlösliche Initiatoren verwendet, z. B. übliche organische Peroxide wie Dibenzoylperoxid, Di-tert.-Butylperoxid, tert.-Butylhydroperoxid, Cumylhydroperoxid oder Bis-cyclohexylperoxidicarbonat eingesetzt. Zur Nachpolymerisation wird das Reaktionsgemisch beispielsweise auf eine Temperatur erhitzt, die der Temperatur entspricht, bei der die Hauptpolymerisation durchgeführt wurde oder die um bis zu 20°C, vorzugsweise bis zu 10°C höher liegt. Die Hauptpolymerisation ist beendet, wenn der Polymerisationsinitiator verbraucht ist bzw. der Monomerumsatz beispielsweise mindestens 98%, vorzugsweise mindestens 99,5% beträgt. Zur Nachpolymerisation wird vorzugsweise tert.-Butylhydroperoxid eingesetzt. Die Nachpolymerisation wird beispielsweise in einem Temperaturbereich von 35 bis 100°C, meistens 45 bis 95°C durchgeführt.

Nach Beendigung der Polymerisation kann man einen Komplexbildner für Schwermetallionen in einer solchen Menge zur Polymerdispersion zusetzen, dass sämtliche

Schwermetallionen komplex gebunden sind. Die stärkehaltigen Polymerdispersionen enthalten dispergierte Teilchen mit einer mittleren Teilchengröße von 20 bis 500 nm, vorzugsweise 50 bis 250 nm. Die mittlere Teilchengröße kann durch dem Fachmann bekannte Methoden wie beispielsweise Laserkorrelationsspektroskopie, Ultrazentrifugation oder HDF (Hydrodynamische Fraktionierung) bestimmt werden. Ein weiteres Maß für die Teilchengröße der dispergierten Polymerteilchen ist der LD-Wert. Zur Bestimmung des LD-Wertes (Lichtdurchlässigkeit) wird die jeweils zu untersuchende Polymerdispersion in 0,1 gew.-%iger wässriger Verdünnung in einer Küvette der Kantenlänge 2,5 cm mit Licht der Wellenlänge 600 nm vermessen und mit der entsprechenden Durchlässigkeit von Wasser unter den gleichen Messbedingungen verglichen. Die Durchlässigkeit von Wasser wird dabei mit 100 % angegeben. Je feinteiliger die Dispersion ist, desto höher ist der LD-Wert, der nach der zuvor beschriebenen Methode gemessen wird. Aus den Messwerten kann die mittlere Teilchengröße errechnet werden, vgl. B. Verner, M. Bárta, B. Sedlácek, Tables of Scattering Functions for Spherical Particles, Prag, 1976, Edice Marco, Rada D-DATA, SVAZEK D-1. Der Feststoffgehalt der stärkehaltigen Polymerdispersion beträgt beispielsweise 5 bis 50 Gew.-%, und liegt vorzugsweise in dem Bereich von 15 bis 40 Gew.-%.

Die oben beschriebenen stärkehaltigen Polymerdispersionen werden als Leimungsmittel für Papier, Pappe und Karton verwendet. Sie können sowohl als Öberflächenleimungsmittel als auch als Masseleimungsmittel in den jeweils üblichen Mengen eingesetzt werden. Bevorzugt ist die Anwendung als Oberflächenleimungsmittel. Dabei können die erfindungsgemäßen Dispersionen mit allen bei der Oberflächenleimung geeigneten Verfahrensmethoden verarbeitet. Für die Anwendung wird die Dispersion üblicherweise der Leimpressenflotte in einer Menge von 0,05 bis 5 Gew.-% bezogen auf Festsubstanz zugesetzt und richtet sich nach dem gewünschten Leimungsgrad der auszurüstenden Papiere. Desweiteren kann die Leimpressenflotte weitere Stoffe enthalten, wie.z. B. Stärke, Pigmente, optische Aufheller, Biozide, Verfestiger für Papier, Fixiermittel, Entschäumer, Retentionsmittel, und/oder Entwässerungsmittel. Die Auftragung auf das Papier kann mittels Leimpresse oder anderen Auftragsaggregaten wie Filmpresse, Speedsizer oder Gate-roll erfolgen. Die Mengen an Polymer, die so auf die Oberfläche von Papierprodukten aufgetragen wird, beträgt beispielsweise 0,005 bis 1,0 g/m², vorzugsweise 0,01 bis 0,5 g/m².

Sofern aus dem Zusammenhang nichts anderes hervorgeht, bedeuten die Prozentangaben in den Beispielen immer Gewichtsprozent. Die Teilchengrößen wurden mittels eines High Performance Particle Sizer (HPPS) der Fa. Malvern unter Verwendung eines He-Ne-Lasers (633 nm) bei einem Streuwinkel von 173° bestimmt.

Die LD-Werte wurden in 0,1 %iger wässriger Lösung der zu bestimmenden Dispersion mit einem Gerät der Fa. Hach DR/2010 bei einer Wellenlänge von 600nm bestimmt.

### Beispiele

### Beispiel 1

In einem Polymerisationsgefäß, das mit Rührer, Rückflusskühler, Mantelheizung und Dosiervorrichtung ausgestattet war, dispergierte man unter Stickstoffatmosphäre und Rühren 54,9 g kationische Kartoffelstärke (DS = 0,07) in 196,9 g entmineralisiertem Wasser. Anschließend fügte man 0,6 g einer 25 gew.-%igen wässrigen Calciumacetatlösung, sowie 6,0 g einer 1 gew.-%igen wässrigen Lösung einer handelsüblichen α-Amylase (Termamyl 120 L der Fa. Novo Nordirsk) hinzu und erwärmte die Mischung unter Rühren innerhalb von 45 min auf 85 °C. Nach weiteren 30 Minuten wurde der enzymatische Stärkeabbau durch Zugabe von 3,0 g Eisessig gestoppt. Nach Zugabe von 0,6 g einer 10 gew.-%igen wässrigen Eisen(II)sulfat-Lösung (FeSO₄ x 7H₂O) ließ man 2,7 g einer 18 gew.-%igen wässrigen Wasserstoffperoxidlösung gleichmäßig unter Rühren innerhalb von 30 min zulaufen. Die Reaktionstemperatur von 85 °C wurde dabei weiterhin beibehalten. Anschließend dosierte man mit konstanter Dosiergeschwindigkeit eine gerührte Mischung bestehend aus 45,7 g entmineralisiertem Wasser, 0,1 g einer 40 gew.-%igen wässrigen Lösung eines Natriumalkylsulfonates (K30 der Fa. Bayer AG) sowie 73,5 g Styrol und 31,5 g n-Butylacrylat innerhalb von 120 min. Gleichzeitig mit der Dosierung des Emulsionszulaufes startete man den getrennten Initiatorzulauf: Innerhalb von 150 min dosierte man 24,2 g einer 18 gew.-%igen wässrigen Wasserstoffperoxidlösung mit konstanter Dosiergeschwindigkeit zum Reaktionsgemisch. Nach Beendigung des Initiatorzulaufes wurde das Reaktionsgemisch weitere 30 min bei 85 °C gerührt, bevor 3,3 g einer 10 gew.-%igen wässrigen t-Butylhydroperoxid-Lösung zugegeben wurden. Nach weiteren 30 min bei 85 °C wurde das Reaktionsgemisch auf 60 °C abgekühlt, es wurden dann nochmals 4,3 g der 10 gew.-%igen wässrigen t-Butylhydroperoxid-Lösung zugegeben und für weitere 30 min nachgerührt. Anschließend kühlte man das Reaktionsgemisch auf Raumtemperatur ab, gab 0,5 g einer 40 gew.-%igen wässrigen Lösung von Ethylendiamintetraessigsäure als Tetranatriumsalz (Trilon B) zu und stellte mit 8,2 g einer 25 gew.-%igen Natronlauge einen pH-Wert von 6,0 ein. Nach Filtration (125 µm) erhielt man eine feinteilige Dispersion mit einem Feststoffgehalt von 33,5 %, einem LD-Wert (0,01%) von 94 und einer Teilchengröße von 76 nm (Laserkorrelationsspektroskopie).

### Vergleichsbeispiel 1 (entsprechend Beispiel 3 gemäß EP-B-1 056 783)

In einem Polymerisationsgefäß, das mit Rührer, Rückflusskühler, Mantelheizung und Dosiervorrichtung ausgestattet war, dispergierte man unter Rühren 29,1 g einer oxidativ abgebauten Kartoffelstärke (Perfectamyl^{®}A 4692 der Fa. Avebe) in 234,7 g entmineralisiertem Wasser. Man erhitzte die Mischung unter Rühren auf 85 °C und fügte nacheinander 10,0 g einer 1 gew.-%igen wässrigen Lösung von FeSO₄ x 7H₂O und 27,1 g einer 3 gew.-%igen wässrigen Wasserstoffperoxidlösung hinzu. Nach 15 min Rühren bei 85 °C startete man gleichzeitig mit den Zuläufen von Monomer und Initiator. Man dosierte jeweils mit konstanter Dosiergeschwindigkeit innerhalb von 90 min sowohl eine Mischung bestehend aus 39,0 g Styrol, 16,0 g n-Butylacrylat, 16,0 g tert.-Butylacrylat und 4,0 g Acrylsäure sowie getrennt davon 21,9 g einer 3 gew.-%igen wässrigen Wasserstoffperoxidlösung. Nach Beendigung der Dosierung rührte man das Reaktionsgemisch noch weitere 15 min bei 85 °C nach und gab dann zur Nachaktivierung 0,3 g tert.-Butylhydroperoxid (70 %) zu. Nach weiteren 60 min bei 85 °C kühlte man auf Raumtemperatur ab und stellte mit Ammoniak (25 %) einen pH-Wert von 6,5 ein. Nach Filtration (100 µm) erhielt man eine feinteilige Dispersion mit einem Feststoffgehalt von 24,1 %, mit einem LD-Wert (0,01 %) von 88 und einer Teilchengröße von 81 nm (Laserkorrelationsspektroskopie)

### Vergleichsbeispiel 2 (entsprechend Beispiel 5 der EP-B-1 056 783).

Vergleichsbeispiel 1 wurde wiederholt, allerdings wurde als Monomerzulauf eine Mischung von 37,5 g Styrol und 37,5 g n-Butylacrylat dosiert. Zur Nachaktivierung wurden 0,5 g tert.-Butylacrylat eingesetzt. Zur Einstellung der Dispersion auf einen pH-Wert von 6.5 wurden 3,3 g NaOH (25 %) zugegeben. Nach Filtration (100 µm) erhielt man eine feinteilige Dispersion mit einem Feststoffgehalt von 24,0 %, mit einem LD-Wert (0,01 %) von 91 und einer Teilchengröße von 69 nm (Laserkorreiationsspektroskopie)

### Vergleichsbeispiel 3 (entsprechend Beispiel 9 der EP-B-1 056 783).

In einem Polymerisationsgefäß, das mit Rührer, Rückflusskühler, Mantelheizung und Dosiervorrichtung ausgestattet war, dispergierte man unter Rühren in einer Stickstoffatmosphäre 24,5 g einer oxidativ abgebauten Kartoffelstärke (Perfectamyl^{®}A 4692 der Fa. Avebe) in 238,5 g entmineralisiertem Wasser. Man erhitzte die Mischung unter Rühren auf 85 °C und fügte nacheinander 5,2 g einer 1 gew.-%igen wässrigen Lösung von FeSO₄ x 7H₂O und 16.0 g einer 3 gew.-%igen wässrigen Wasserstoffperoxidlösung hinzu und rührte für weitere 15 min bei 85 °C nach. Anschließend startete man gleichzeitig mit den Zuläufen von Monomer und Initiator. Man dosierte jeweils mit konstanter Dosiergeschwindigkeit innerhalb von 90 min sowohl eine Mischung bestehend aus 32,7 g Styrol, 23,1 g n-Butylacrylat, 19,2 g Methylmethacrylat sowie getrennt davon 21,9 g einer 3 gew.-%igen wässrigen Wasserstoffperoxidlösung. Nach Beendigung der Dosierung rührte man noch weitere 15 min bei 85 °C nach und gab dann zur Nachaktivierung 0,4 g tert.-Butylhydroperoxid (70 %) zu. Nach weiteren 60 min bei 85 °C kühlte man auf Raumtemperatur ab, gab 2,2 g einer 10 gew.-%igen wässrigen Lösung von Ethylendiamintetraessigsäure als Tetranatriumsalz (Trilon B) zu und stellte mit 2,5 g Natronlauge (25 %) einen pH-Wert von 6,5 ein. Nach Filtration (100 µm erhält man eine feinteilige Dispersion mit einem Feststoffgehalt von 23,4 %, mit einem LD-Wert (0,01 %) von 89 und einer Teilchengröße von 64 nm (Laserkorrelationsspektroskopie)

### Vergleichsbeispiel 4 (entsprechend Beispiel 10 der EP-B-1 056 783).

In einem Polymerisationsgefäß, das mit Rührer, Rückflusskühler, Mantelheizung und Dosiervorrichtung ausgestattet war, dispergierte man unter Rühren in einer Stickstoffatmosphäre 25,7 einer oxidativ abgebauten, kationisierte Kartoffelstärke (Amylofax 15 der Fa. Avebe) in 237,4 g entmineralisiertem Wasser. Man erhitzte die Mischung unter Rühren auf 85 °C und fügte nacheinander 5,9 g einer 1 gew.-%igen wässrigen Lösung von FeSO₄ x 7H₂O und 17,3 g einer 3 gew.-%igen wässrigen Wasserstoffperoxidlösung hinzu und rührte für weitere 15 min bei 85 °C nach. Anschließend startete man gleichzeitig mit den Zuläufen von Monomer und Initiator. Man dosierte jeweils mit konstanter Dosiergeschwindigkeit innerhalb von 90 min sowohl eine Mischung bestehend aus 43,3 g Styrol, 20,2 g n-Butylacrylat, 11,5 g Methylmethacrylat sowie getrennt davon 21,9 g einer 3 gew.-%igen wässrigen Wasserstoffperoxidlösung. Nach Beendigung der Dosierung rührte man noch weitere 15 min bei 85 °C nach und gab dann zur Nachaktivierung 0,5 g tert.-Butylhydroperoxid (70 %) zu. Nach weiteren 60 min bei 85 °C kühlte man auf Raumtemperatur ab, gab 2,6 g einer 10 gew.-%igen wässrigen Lösung von Ethylendiamintetraessigsäure als Tetranatriumsalz (Trilon B) zu und stellte mit 3,1 g Natronlauge (25 %) einen pH-Wert von 6,5 ein. Nach Filtration (100 µm) erhielt man eine feinteilige Dispersion mit einem Feststoffgehalt von 24,7 %, mit einem LD-Wert (0.01 %) von 92 und einer Teilchengröße von 67 nm (Laserkorrelationsspektroskopie)

### Vergleichsbeispiel 5 (entsprechend Beispiel 1 aus WO-A-02114393).

In einem Polymerisationsgefäß, das mit Rührer, Rückflusskühler, Mantelheizung und Dosiervorrichtung ausgestattet war, wurden unter Stickstoffatmosphäre und Rühren 77,1 g einer oxidativ abgebauten Kartoffelstärke (Amylex 15 der Fa. Südstärke) in 159,6 g entmineralisiertem Wasser vorgelegt. Man erwärmte die Mischung unter Rühren innerhalb von 45 min auf 85 °C und fügte 0,9 g einer 25 gew.-%igen wässrigen Calciumacetatlösung, sowie 5,4 g einer 1 gew.-%igen wässrigen Lösung einer handelsüblichen α-Amylase (Termamyl 120 L der Fa. Novo Nordirsk) hinzu. Nach 30 Minuten wurde der enzymatische Stärkeabbau durch Zugabe von 8,6 g Eisessig gestoppt. Anschließend gab man 17,1 g einer 1 gew.-%igen wässrigen Eisen(II)sulfat-Lösung (FeSO₄ x 7H₂O) zum Reaktionsgemisch. Bei einer Reaktionstemperatur von weiterhin 85 °C ließ man anschließend mit konstanter Dosiergeschwindigkeit innerhalb von 90 min eine Monomermischung bestehend aus 53,6 g entmineralisiertem Wasser, 2,7 g einer 4 gew.-%igen wässrigen Lösung eines Natriumalkylsulfonates (K30 der Fa. Bayer AG) sowie 105,0 g Styrol und 45,0 g n-Butylacrylat zulaufen. Gleichzeitig mit dem Monomerzulauf begann der Initiatorzulauf. Innerhalb der ersten 30 min wurden 21,4 g einer 30 gew.-%igen Wasserstoffperoxidlösung zugegeben. Anschließend wurden in 75 min 7,0 g einer 30 gew.-%igen Wasserstoffperoxidlösung dosiert. Nachdem der Monomerzulauf beendet war, wurde die Temperatur bis zum Ende des Initiatorzulaufes auf Polymerisationstemperatur gehalten. Danach wurde auf Raumtemperatur abgekühlt und mit NaOH (25 %) ein pH-Wert von 5.0 eingestellt. Nach Filtration (125 µm) erhielt man eine feinteilige Dispersion mit einem Feststoffgehalt von 36,1 %, mit einem LD-Wen (0,01%) von 79 und einer Teilchengröße von 181 nm (Laserkorrelationsspektroskopie)

### Vergleichsbeispiel 6 (entsprechend "Kationische Dispersion 2" gemäß EP-A-0307816).

In einem Polymerisationsgefäß, das mit Rührer, Rückflusskühler, Mantelheizung und Dosiervorrichtung ausgestattet war, wurden unter Stickstoffatmosphäre und Rühren 31,1 g einer oxidativ abgebauten Kartoffelstärke (Amylofax 15 der Fa. Avebe) in 199,5 g entmineralisiertem Wasser vorgelegt. Man löste die Stärke unter Rühren durch Erhitzen auf 85 °C. Bei dieser Temperatur fügte man nacheinander 5,6 g Eisessig, 0,05 g Eisen(II)sulfat (FeSO₄ x 7H₂O) sowie 1,2 g einer 30 gew.-%igen Wasserstoffperoxidlösung zu. Nach 20 Minuten gab man nochmals 1,2 g der 30 gew.-%igen Wasserstoffperoxidlösung zu. Anschließend dosierte man innerhalb von 2 h eine Mischung bestehend aus 66 g n-Butylacrylat, 58,5 g Styrol, 0,07 g Natriumlaurylsuffat und 43,5 g entmineralisiertem Wasser. Gleichzeitig begann der Initiatorzulauf von 21 g einer 5,5 gew.-%igen Wasserstoffperoxidlösung, der ebenfalls über 2 h mit konstanter Dosiergeschwindigkeit zudosiert wurde. Nach Beendigung der Zuläufe wurde noch eine Stunde bei 85 °C nachpolymerisiert. Nach Filtration (125 µm) erhielt man eine Dispersion mit einem Feststoffgehalt von 33,9 %, mit einem LD-Wert (0,01%) von 86 und einer Teilchengröße von 110 nm (Laserkorrelationsspektroskopie).

Die oben beschriebenen stärkehaltigen Polymerdispersionen wurden als Leimungsmittel für Papier gemäß den folgenden Prüfmethoden getestet:

Die Bestimmung des Leimungsgrades erfolgte nach Cobb60 gemäß DIN EN 20 535. Die Tintenschwimmzeit (TSD) wurde gemäß DIN 53 126 mit einer Papierprüftinte blau durchgeführt. Die Tonerhaftung wurde gemäß EN 12883 bei einer konstanten Geschwindigkeit an einem IGT Tester bestimmt.

Applikation der stärkehaltigen Polymerdispersionen in Kombination mit Stärke auf Papier:

Eine oxidativ abgebaute, im Handel erhältliche Kartoffelstärke wurde unter Erhitzen auf 95°C für eine definierte Zeit in Lösung gebracht. Anschließend wurde der Feststoffgehalt der Stärkelösung auf 8% eingestellt. Diese Stärkelösung wurde dann mit der jeweils zu prüfenden Polymerdispersion in den angegebenen Konzentrationen versetzt.

Die Mischung aus Stärkelösung und Polymerdispersion wurde anschließend mittels einer Leimpresse auf ein Papier mit einem Flächengewicht von 80g/m², weiches in der Masse mit AKD (C₁₈-Alkyldiketen) schwach vorgeleimt war, bei einer Temperatur von 50°C aufgetragen. Die Präparationsaufnahme lag im Bereich von 40-45%. Anschließend wurden die so behandelten Papiere mittels Kontakttrocknung bei 90°C getrocknet, 24h bei 50% Luftfeuchte klimatisiert und dann den oben angegebenen Prüfungen unterzogen. Die Ergebnisse sind in der folgenden Tabelle angegeben.

**Tabelle**

| | Cobb60 [g/m²] | | TSD [min] | | Tonerhaftung [% Farbdichte] |
|---|---|---|---|---|---|
| | 2g/l | 4g/l | 2 g/l | 4g/l | |
| Beispiel 1: FG 33,5%, TGV 76nm | 27 | 25 | 14 | 24 | 87 |
| Vergleichsbeispiel 1: FG 24,1%, TGV 81 nm | 52 | 30 | 5 | 18 | 75 |
| Vergleichsbeispiel 2: FG 24%, TGV 69nm | 35 | 26 | 5 | 15 | 63 |
| Vergleichsbeispiel 3: FG 23,4%, TGV 64nm | 35 | 28 | 17 | 26 | 61 |
| Vergleichsbeispiel 4: FG 24,7%, TGV 67nm | 29 | 25 | 18 | 26 | 72 |
| Vergleichsbeispiel 5: FG 36,1%, TGV 181nm | 77 | 32 | 2 | 14 | 77 |
| Vergleichsbeispiel 6: FG 33,9%, TGV 110nm | 57 | 35 | 4 | 17 | 79 |

| | | | | | |
|---|---|---|---|---|---|
| FG = Feststoffgehalt TGV = Teilchengröße der dispergierten Polymerteilchen | | | | | |

## Patentansprüche

1. Feinteilige, stärkehaltige Polymerdispersionen, die erhältlich sind durch radikalisch initiierte Emulsionscopolymerisation von ethylenisch ungesättigten Monomeren in Gegenwart mindestens eines Redoxinitiators und Stärke, **dadurch gekennzeichnet, dass** man als ethylenisch ungesättigte Monomere
(a) 45 bis 55 Gew.-% mindestens eines gegebenenfalls substituierten Styrols, Methacrylsäuremethylester, Acrylnitril und/oder Methacrylnitril
(b) 15 bis 29 Gew.-% mindestens eines Acrylsäure-C₁-C₁₂-alkylesters und/oder eines Methacrylsäure-C₂-C₁₂-alkylesters und
(c) 0 bis 10 Gew.-% mindestens eines Monomers aus der Gruppe Stearylacrylat, Stearylmethacrylat, Palmitylacrylat, Behenylacrylat, Behenylmethacrylat, Vinylacetat, Vinylpropionat, Hydroxyethylacrylat, Hydroxyethylmethacrylat, N-Vinylformamid, Acrylamid, Methacrylamid, N-Vinylpyrrolidon, N-Vinylcaprolactam, N-Vinylimidazol, Acrylsäure, Methacrylsäure, Acrylamidomethylpropansulfonsäure, Styrolsulfonsäure, Vinylsulfonsäure und Salze der Säuregruppen enthaltenden Monomeren
und als Stärke
(d) 15 bis 35 Gew.-% einer abgebauten kationisierten Stärke einsetzt, die eine Molmasse M_{w} von 1004 bis 65 000 hat,
wobei die Summe (a) + (b) + (c) + (d) = 100% beträgt und sich auf den Gesamtfeststoffgehalt bezieht.

2. Feinteilige, stärkehaltige Polymerdispersionen nach Anspruch 1, **dadurch gekennzeichnet, dass** man als ethylenisch ungesättigte Monomere
(a) 47 bis 51 Gew.-% mindestens eines Monomers aus der Gruppe Styrol, Methacrylsäuremethylester, Acrylnitril und/oder Methacrylnitril,
(b) 19 bis 25 Gew.-% mindestens eines Acrylsäure-C₁-C₁₂-alkylesters und/oder eines Methacrylsäure-C₂-C₁₂-alkylesters und
(c) 0 bis 10 Gew.-% mindestens eines Monomers aus der Gruppe Stearylacrylat, Stearylmethacrylat, Palmitylacrylat, Behenylacrylat, Behenylmethacrylat, Vinylacetat, Vinylpropionat, Hydroxyethylacrylat, Hydroxyethylmethacrylat, N-Vinylformamid, Acrylamid, Methacrylamid, N-Vinylpyrrolidon, N-Vinylcaprolactam, N-Vinylimidazol, Acrylsäure, Methacrylsäure, Acrylamidomethylpropansulfonsäure, Styrolsulfonsäure, Vinylsulfonsäure und Salze der Säuregruppen enthaltenden Monomeren und als Stärke
(d) 24 bis 30 Gew.-% einer abgebauten kationisierten Stärke einsetzt, die eine Molmasse M_{w} von 2500 bis 35 000 hat,
wobei die Summe (a) + (b) + (c) + (d) = 100% beträgt und sich auf den Gesamtfeststoffgehalt bezieht.

3. Feinteilige, stärkehaltige Polymerdispersionen nach Anspruch 1 oder 2, **dadurch gekennzeichnet, dass** man als ethylenisch ungesättigte Monomere
(a) 47 bis 51 Gew.-% mindestens eines Monomers aus der Gruppe Styrol, Methacrylsäuremethylester, Acrylnitril und/oder Methacrylnitril,
(b) 19 bis 25 Gew.-% Acrylsäure-n-butylester, Acrylsäure-sek.-butylester, Acrylsäure-iso-butylester, Acrylsäure-tert.-butylester und/oder Acrylsäure-2-ethylhexylester und
(c) 0 bis 10 Gew.-% mindestens eines Monomers aus der Gruppe Stearylacrylat, Stearylmethacrylat, Palmitylacrylat, Behenylacrylat, Behenylmethacrylat, Vinylacetat, Vinylpropionat, Hydroxyethylacrylat, Hydroxyethylmethacrylat, N-Vinylformamid, Acrylamid, Methacrylamid, N-Vinylpyrrolidon, N-Vinylcaprolactam, N-Vinylimidazol, Acrylsäure, Methacrylsäure, Acrylamidomethylpropansulfonsäure, Styrolsulfonsäure, Vinylsulfonsäure und Salze der Säuregruppen enthaltenden Monomeren
und als Stärke
(d) 24 bis 30 Gew.-% einer abgebauten kationisierten Stärke einsetzt, die eine Molmasse M_{w} von 2500 bis 35 000 hat,
wobei die Summe (a) + (b) + (c) + (d) = 100% beträgt und sich auf den Gesamtfeststoffgehalt bezieht.

4. Verfahren zur Herstellung von feinteiligen, stärkehaltigen Polymerdispersionen nach einem der Ansprüche 1 bis 3, **dadurch gekennzeichnet, dass** man
(a) 45 bis 55 Gew.-% mindestens eines gegebenenfalls substituierten Styrols, Methacrylsäuremethylester, Acrylnitril und/oder Methacrylnitril,
(b) 15 bis 29 Gew.-% mindestens eines Acrylsäure-C₁-C₁₂-alkylesters und/oder eines Methacrylsäure-C₂-C₁₂-alkylesters,
(c) 0 bis 10 Gew.-% mindestens eines Monomers aus der Gruppe Stearylacrylat, Stearylmethacrylat, Palmitylacrylat, Behenylacrylat, Behenylmethacrylat, Vinylacetat, Vinylpropionat, Hydroxyethylacrylat, Hydroxyethylmethacrylat, N-Vinylformamid, Acrylamid, Methacrylamid, N-Vinylpyrrolidon, N-Vinylcaprolactam, N-Vinylimidazol, Acrylsäure, Methacrylsäure, Acrylamidomethylpropansulfonsäure, Styrolsulfonsäure, Vinylsulfonsäure und Salze der Säuregruppen enthaltenden Monomeren
und
(d) 15 bis 35 Gew.-% einer abgebauten kationisierten Stärke, die eine Molmasse M_{w} von 1000 bis 25 000 hat, wobei die Summe (a) + (b) + (c) + (d) = 100% beträgt, in Gegenwart eines Redoxinitiators in einem wässrigen Medium polymerisiert.

5. Verfahren nach Anspruch 4, **dadurch gekennzeichnet, dass** man der Polymerdispersion nach Beendigung der Hauptpolymerisation einen Initiator aus der Gruppe Wasserstoffperoxid, Peroxide, Hydroperoxide und/oder Azostarter zusetzt und eine Nachpolymerisation durchführt.

6. Verfahren nach Anspruch 5, **dadurch gekennzeichnet, dass** man der Polymerdispersion zur Nachpolymerisation tert.-Butylhydroperoxid zusetzt.

7. Verfahren nach einem der Ansprüche 4 bis 6, **dadurch gekennzeichnet, dass** man die kationisierte Stärke vor Beginn der Polymerisation enzymatisch und/oder oxidativ abbaut.

8. Verfahren nach einem der Ansprüche 4 bis 7, **dadurch gekennzeichnet, dass** man nach Beendigung der Polymerisation einen Komplexbildner für Schwermetallionen in einer solchen Menge zur Polymerdispersion zusetzt, um sämtliche Schwermetallionen komplex zu binden.

9. Verwendung der stärkehaltigen Polymerdispersionen nach den Ansprüchen 1 bis 3 als Leimungsmittel für Papier, Pappe und Karton.

## Claims

1. A finely divided, starch-containing polymer dispersion obtainable by free radical emulsion copolymerization of ethylenically unsaturated monomers in the presence of at least one redox initiator and starch, wherein
(a) from 45 to 55% by weight of at least one optionally substituted styrene, methyl methacrylate, acrylonitrile and/or methacrylonitrile,
(b) from 15 to 29% by weight of at least one C₁-C₁₂-alkyl acrylate and/or one C₂-C₁₂-alkyl methacrylate and
(c) from 0 to 10% by weight of at least one monomer from the group consisting of stearyl acrylate, stearyl methacrylate, palmityl acrylate, behenyl acrylate, behenyl methacrylate, vinyl acetate, vinyl propionate, hydroxyethyl acrylate, hydroxyethyl methacrylate, N-vinylformamide, acrylamide, methacrylamide, N-vinylpyrrolidone, N-vinylcaprolactam, N-vinylimidazole, acrylic acid, methacrylic acid, acrylamidomethylpropanesulfonic acid, styrenesulfonic acid, vinylsulfonic acid and salts of the monomers comprising acid groups
are used as ethylenically unsaturated monomers and
(d) from 15 to 35% by weight of a degraded cationized starch which has a molar mass M_{w} of from 1000 to 65 000
are used as starch,
the sum (a) + (b) + (c) + (d) being 100% and being based on the total solids content.

2. The finely divided, starch-containing polymer dispersion according to claim 1, wherein
(a) from 47 to 51% by weight of at least one monomer from the group consisting of styrene, methyl methacrylate, acrylonitrile and/or methacrylonitrile,
(b) from 19 to 25% by weight of at least one C₁-C₁₂-alkyl acrylate and/or one C₂-C₁₂-alkyl methacrylate and
(c) from 0 to 10% by weight of at least one monomer from the group consisting of stearyl acrylate, stearyl methacrylate, palmityl acrylate, behenyl acrylate, behenyl methacrylate, vinyl acetate, vinyl propionate, hydroxyethyl acrylate, hydroxyethyl methacrylate, N-vinylformamide, acrylamide, methacrylamide, N-vinylpyrrolidone, N-vinylcaprolactam, N-vinylimidazole, acrylic acid, methacrylic acid, acrylamidomethylpropanesulfonic acid, styrenesulfonic acid, vinylsulfonic acid and salts of the monomers comprising acid groups
are used as ethylenically unsaturated monomers and
(d) from 24 to 30% by weight of a degraded cationized starch which has a molar mass M_{w} of from 2500 to 35 000 are used as starch,
the sum (a) + (b) + (c) + (d) being 100% and being based on the total solids content.

3. The finely divided, starch-containing polymer dispersion according to claim 1 or 2, wherein
(a) from 47 to 51% by weight of at least one monomer from the group consisting of styrene, methyl methacrylate, acrylonitrile and/or methacrylonitrile,
(b) from 19 to 25% by weight of n-butyl acrylate, sec-butyl acrylate, isobutyl acrylate, tert-butyl acrylate and/or 2-ethylhexyl acrylate and
(c) from 0 to 10% by weight of at least one monomer from the group consisting of stearyl acrylate, stearyl methacrylate, palmityl acrylate, behenyl acrylate, behenyl methacrylate, vinyl acetate, vinyl propionate, hydroxethyl acrylate, hydroxyethyl methacrylate, N-vinylformamide, acrylamide, methacrylamide, N-vinylpyrrolidone, N-vinylcaprolactam, N-vinylimidazole, acrylic acid, methacrylic acid, acrylamidomethylpropanesulfonic acid, styrenesulfonic acid, vinylsulfonic acid and salts of the monomers comprising acid groups
are used as ethylenically unsaturated monomers and
(d) from 24 to 30% by weight of a degraded cationized starch which has a molar mass M_{w} of from 2500 to 35 000
are used as starch,
the sum (a) + (b) + (c) + (d) being 100% and being based on the total solids content.

4. A process for the preparation of finely divided, starch-containing polymer dispersions according to any of claims 1 to 3, wherein
(a) from 45 to 55% by weight of at least one optionally substituted styrene, methyl methacrylate, acrylonitrile and/or methacrylonitrile,
(b) from 15 to 29% by weight of at least one C₁-C₁₂-alkyl acrylate and/or one C₂-C₁₂-alkyl methacrylate,
(c) from 0 to 10% by weight of at least one monomer from the group consisting of stearyl acrylate, stearyl methacrylate, palmityl acrylate, behenyl acrylate, behenyl methacrylate, vinyl acetate, vinyl propionate, hydroxyethyl acrylate, hydroxyethyl methacrylate, N-vinylformamide, acrylamide, methacrylamide, N-vinylpyrrolidone, N-vinylcaprolactam, N-vinylimidazole, acrylic acid, methacrylic acid, acrylamidomethylpropanesulfonic acid, styrenesulfonic acid, vinylsulfonic acid and salts of the monomers comprising acid groups
and
(d) from 15 to 35% by weight of a degraded cationized starch which has a molar mass M_{w} of from 1000 to 25 000, the sum (a) + (b) + (c) + (d) being 100%, are polymerized in the presence of a redox initiator in an aqueous medium.

5. The process according to claim 4, wherein an initiator from the group consisting of hydrogen peroxide, peroxides, hydroperoxides and/or azo initiators is added to the polymer dispersion after the end of the main polymerization, and a postpolymerization is carried out.

6. The process according to claim 5, wherein tert-butyl hydroperoxide is added to the polymer dispersion for the postpolymerization.

7. The process according to any of claims 4 to 6, wherein the cationized starch is enzymatically and/or oxidatively degraded before the beginning of the polymerization.

8. The process according to any of claims 4 to 7, wherein, after the end of the polymerization, a complexing agent for heavy metal ions is added to the polymer dispersion in an amount sufficient to bond all heavy metal ions with complex formation.

9. The use of the starch-containing polymer dispersions according to any of claims 1 to 3 as sizes for paper, board and cardboard.

## Revendications

1. Dispersions de polymères finement divisées, contenant de l'amidon, qui peuvent être obtenues par copolymérisation en émulsion, à amorçage radicalaire, de monomères à insaturation éthylénique en présence d'au moins un amorceur redox et d'amidon, **caractérisées en ce qu'**on utilise en tant que monomères à insaturation éthylénique
(a) de 45 à 55 % en poids d'au moins un styrène, méthacrylate de méthyle, acrylonitrile et/ou méthacrylonitrile, éventuellement substitué
(b) de 15 à 29 % en poids d'au moins un acrylate d'alkyle en C₁-C₁₂ et/ou d'un méthacrylate d'alkyle en C₂-C₁₂ et
(c) de 0 à 10 % en poids d'au moins un monomère choisi dans le groupe constitué par l'acrylate de stéaryle, le méthacrylate de stéaryle, l'acrylate de palmityle, l'acrylate de béhényle, le méthacrylate de béhényle, l'acétate de vinyle, le propionate de vinyle, l'acrylate d'hydroxyéthyle, le méthacrylate d'hydroxyéthyle, le N-vinylformamide, l'acrylamide, le méthacrylamide, la N-vinylpyrrolidone, le N-vinylcaprolactame, le N-vinylimidazole, l'acide acrylique, l'acide méthacrylique, l'acide acrylamidométhyl-propanesulfonique, l'acide styrènesulfonique, l'acide vinylsulfonique et les sels des monomères qui contiennent des groupes acides
et en tant qu'amidon
(d) de 15 à 35 % en poids d'un amidon cationisé dégradé, qui a une masse moléculaire M_{w} de 1 000 à 65 000,
la somme (a) + (b) + (c) + (d) étant égale à 100 % et se rapportant à la teneur totale en matières solides.

2. Dispersions de polymères finement divisées, contenant de l'amidon, selon la revendication 1, **caractérisées en ce qu'**on utilise en tant que monomères à insaturation éthylénique
(a) de 47 à 51 % en poids d'au moins un monomère choisi dans le groupe constitué par le styrène, le méthacrylate de méthyle, l'acrylonitrile et/ou le méthacrylonitrile,
(b) de 19 à 25 % en poids d'au moins un acrylate d'alkyle en C₁-C₁₂ et/ou d'un méthacrylate d'alkyle en C₂-C₁₂ et
(c) de 0 à 10 % en poids d'au moins un monomère choisi dans le groupe constitué par l'acrylate de stéaryle, le méthacrylate de stéaryle, l'acrylate de palmityle, l'acrylate de béhényle, le méthacrylate de béhényle, l'acétate de vinyle, le propionate de vinyle, l'acrylate d'hydroxyéthyle, le méthacrylate d'hydroxyéthyle, le N-vinylformamide, l'acrylamide, le méthacrylamide, la N-vinylpyrrolidone, le N-vinylcaprolactame, le N-vinylimidazole, l'acide acrylique, l'acide méthacrylique, l'acide acrylamidométhyl-propanesulfonique, l'acide styrènesulfonique, l'acide vinylsulfonique et les sels des monomères qui contiennent des groupes acides
et en tant qu'amidon
(d) de 24 à 30 % en poids d'un amidon cationisé dégradé, qui a une masse moléculaire M_{w} de 2 500 à 35 000,
la somme (a) + (b) + (c) + (d) étant égale à 100 % et se rapportant à la teneur totale en matières solides.

3. Dispersions de polymères finement divisées, contenant de l'amidon, selon la revendication 1 ou 2, **caractérisées en ce qu'**on utilise en tant que monomères à insaturation éthylénique
(a) de 47 à 51 % en poids d'au moins un monomère choisi dans le groupe constitué par le styrène, le méthacrylate de méthyle, l'acrylonitrile et/ou le méthacrylonitrile,
(b) de 19 à 25 % en poids d'acrylate de n-butyle, d'acrylate de sec-butyle, d'acrylate d'isobutyle, d'acrylate de tert-butyle et/ou d'acrylate de 2-éthylhexyle et
(c) de 0 à 10 % en poids d'au moins un monomère choisi dans le groupe constitué par l'acrylate de stéaryle, le méthacrylate de stéaryle, l'acrylate de palmityle, l'acrylate de béhényle, le méthacrylate de béhényle, l'acétate de vinyle, le propionate de vinyle, l'acrylate d'hydroxyéthyle, le méthacrylate d'hydroxyéthyle, le N-vinylformamide, l'acrylamide, le méthacrylamide, la N-vinylpyrrolidone, le N-vinylcaprolactame, le N-vinylimidazole, l'acide acrylique, l'acide méthacrylique, l'acide acrylamidométhyl-propanesulfonique, l'acide styrènesulfonique, l'acide vinylsulfonique et les sels des monomères qui contiennent des groupes acides
et en tant qu'amidon
(d) de 24 à 30 % en poids d'un amidon cationisé dégradé, qui a une masse moléculaire M_{w} de 2 500 à 35 000,
la somme (a) + (b) + (c) + (d) étant égale à 100 % et se rapportant à la teneur totale en matières solides.

4. Procédé pour la préparation de dispersions de polymères finement divisées, contenant de l'amidon, selon l'une quelconque des revendications 1 à 3, **caractérisé en ce qu'**on polymérise dans un milieu aqueux, en présence d'un amorceur redox,
(a) 45 à 55 % en poids d'au moins un styrène, méthacrylate de méthyle, acrylonitrile et/ou méthacrylonitrile, éventuellement substitué
(b) 15 à 29 % en poids d'au moins un acrylate d'alkyle en C₁-C₁₂ et/ou d'un méthacrylate d'alkyle en C₂-C₁₂,
(c) 0 à 10 % en poids d'au moins un monomère choisi dans le groupe constitué par l'acrylate de stéaryle, le méthacrylate de stéaryle, l'acrylate de palmityle, l'acrylate de béhényle, le méthacrylate de béhényle, l'acétate de vinyle, le propionate de vinyle, l'acrylate d'hydroxyéthyle, le méthacrylate d'hydroxyéthyle, le N-vinylformamide, l'acrylamide, le méthacrylamide, la N-vinylpyrrolidone, le N-vinylcaprolactame, le N-vinylimidazole, l'acide acrylique, l'acide méthacrylique, l'acide acrylamidométhyl-propanesulfonique, l'acide styrènesulfonique, l'acide vinylsulfonique et les sels des monomères qui contiennent des groupes acides
et
(d) 15 à 35 % en poids d'un amidon cationisé dégradé, qui a une masse moléculaire M_{w} de 1 000 à 25 000, la somme (a) + (b) + (c) + (d) étant égale à 100 %.

5. Procédé selon la revendication 4, **caractérisé en ce qu'**une fois terminée la polymérisation principale on ajoute à la dispersion de polymère un amorceur choisi dans le groupe constitué par le peroxyde d'hydrogène, les peroxydes, les hydroperoxydes et/ou les amorceurs azo, et on effectue une post-polymérisation.

6. Procédé selon la revendication 5, **caractérisé en ce que** pour la post-polymérisation on ajoute de l'hydroperoxyde de tert-butyle à la dispersion de polymère.

7. Procédé selon l'une quelconque des revendications 4 à 6, **caractérisé en ce que** l'amidon cationisé est dégradé par oxydation et/ou par voie enzymatique avant le début de la polymérisation.

8. Procédé selon l'une quelconque des revendications 4 à 7, **caractérisé en ce qu'**une fois terminée la polymérisation on ajoute à la dispersion de polymère un complexant pour ions de métaux lourds, en une quantité suffisante pour lier en complexe tous les ions de métaux lourds.

9. Utilisation des dispersions de polymères contenant de l'amidon, selon les revendications 1 à 3, en tant qu'agent de collage pour papier, carton et carte.
